# FASCICULE DE BREVET EUROPEEN

(11) **EP 2 016 876 B1**
(45) Date de publication et mention de la délivrance du brevet: **11.01.2012**
(21) Numéro de dépôt: 08447037.6
(22) Date de dépôt: 22.07.2008
(51) Int. Cl.: A47J 27/09, A47J 27/08

(54) **Autocuiseur à habillage en matière plastique**
Schnellkochtopf mit Plastikverkleidung
Pressure cooker with plastic material covering

(30) Priorité: 20.07.2007 FR 0705263
(43) Date de publication de la demande: 21.01.2009
(73) Titulaire: SEB S.A., 69132 Ecully Cedex (FR)
(72) Inventeur: Rhetat, Eric Jacques, 21000 Dijon (FR); Cartigny, Michel Pierre, 21310 Mirebeau sur Beze (FR)
(74) Mandataire: Martin, Didier Roland Valéry

(56) Documents cités:
- EP-A- 0 438 080
- DE-A1-102005 044 118

## Description

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein.

La présente invention concerne plus particulièrement un autocuiseur domestique comprenant au moins une cuve et un couvercle destiné à être rapporté sur la cuve pour former avec cette dernière une enceinte de cuisson, ledit couvercle présentant une face interne destinée à se trouver en regard de l'intérieur de l'enceinte et une face externe opposée.

Les autocuiseurs domestiques sont bien connus. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche.

Un tel autocuiseur est connu du document DE 102005044118A.

Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Ces appareils permettent ainsi de réaliser une cuisson des aliments sous pression de vapeur qui s'avère particulièrement efficace et respectueuse des qualités organoleptiques et nutritionnelles des aliments.

Ces autocuiseurs connus présentent toutefois un aspect très technique qui est de nature à effrayer de nombreux utilisateurs potentiels.

En d'autres termes, les autocuiseurs connus génèrent souvent à l'endroit de nombreux utilisateurs ou utilisateurs potentiels un sentiment anxiogène, qui bien qu'infondé puisque ces appareils sont généralement très simples et sûrs à utiliser, n'en reste pas moins prégnant et dissuade de nombreuses personnes d'utiliser ces appareils malgré tout le bénéfice, en terme de rapidité et de qualité de cuisson, qu'ils sont susceptibles d'apporter.

Ce sentiment anxiogène est exacerbé par le fait qu'au cours du processus de cuisson, les pièces métalliques des autocuiseurs connus atteignent des températures élevées ce qui génère donc un risque de brûlure, bien réel d'ailleurs, si l'utilisateur touche par mégarde l'une des pièces métalliques en question, en voulant par exemple modifier un réglage de l'appareil.

Enfin, le sentiment anxiogène évoqué précédemment est également renforcé par la perception de la déformation du couvercle sous l'effet de l'augmentation de la pression. Une telle déformation peut en effet s'effectuer selon des profils qui, bien qu'étant tout à fait normaux et sans danger, peuvent s'avérer spectaculaires et évocateurs de danger pour certains, en particulier dans le cas d'autocuiseurs à couvercle rentrant, c'est-à-dire dont le couvercle est inséré dans la cuve.

Les objets assignés à l'invention visent en conséquence à porter remède aux différents inconvénients énumérés précédemment et à proposer un nouvel autocuiseur domestique dont la construction est non seulement particulièrement sûre, mais contribue en outre à réduire notablement le sentiment anxiogène de l'utilisateur tout en améliorant le rendement énergétique de l'autocuiseur.

Un autre objet de l'invention vise à proposer un nouvel autocuiseur domestique dont la construction, tout en étant compacte et bon marché, permet de contrôler le positionnement relatif du couvercle et de la cuve.

Un autre objet de l'invention vise à proposer un nouvel autocuiseur domestique dont la construction, tout en étant particulièrement compacte et économique, permet la mise en oeuvre d'un moyen de verrouillage / déverrouillage du couvercle relativement à la cuve nécessitant un positionnement relatif spécifique du couvercle sur la cuve.

Un autre objet de l'invention vise à proposer un nouvel autocuiseur domestique particulièrement sûr.

Un autre objet de l'invention vise à proposer un nouvel autocuiseur domestique de construction particulièrement simple, économique et compacte.

Un autre objet de l'invention vise à proposer un nouvel autocuiseur domestique dont le fonctionnement repose sur des principes mécaniques simples et fiables.

Un autre objet de l'invention vise à proposer un nouvel autocuiseur domestique qui, tout en étant très sûr, est en outre de construction particulièrement économique.

Un autre objet de l'invention vise à proposer un nouvel autocuiseur domestique qui limite fortement l'effet anxiogène susceptible d'être ressenti par l'utilisateur lors du travail des pièces métalliques de l'autocuiseur sous l'effet de l'augmentation de pression.

Un autre objet de l'invention vise à proposer un nouvel autocuiseur domestique pourvu d'un moyen de verrouillage / déverrouillage particulièrement fiable et discret.

Un autre objet de l'invention vise à proposer un nouvel autocuiseur domestique particulièrement bon marché.

Les objets assignés à l'invention sont atteints à l'aide d'un autocuiseur domestique comprenant au moins une cuve et un couvercle destiné à être rapporté sur la cuve pour former avec cette dernière une enceinte de cuisson, ledit couvercle présentant une face interne destinée à se trouver en regard de l'intérieur de l'enceinte et une face externe opposée, caractérisé en ce qu'il comprend un habillage en matière plastique qui recouvre sensiblement l'intégralité de ladite face externe.

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
- La figure 1 illustre, selon une vue générale en perspective, un premier mode de réalisation d'un autocuiseur domestique conforme à l'invention.
- La figure 2 illustre, selon une vue en élévation, l'autocuiseur de la figure 1, dépourvu de l'une de ses poignées.
- La figure 3 est une vue agrandie du détail encerclé sur la figure 2.
- La figure 4 est une vue en coupe partielle selon deux plans de coupe orthogonaux de l'autocuiseur de la figure 1.
- La figure 5 est une vue de dessus en coupe partielle de l'autocuiseur des figures 1 à 4 avec son moyen de verrouillage / déverrouillage en configuration de verrouillage.
- La figure 6 est une vue de dessus de l'autocuiseur des figures 1 à 5 dépourvu de ses poignées et dont le moyen de verrouillage / déverrouillage est en configuration de déverrouillage.
- Les figures 7 et 8 illustrent un même détail de réalisation de l'autocuiseur des figures 1 à 6, en coupe partielle selon deux plans de coupe respectifs différents.
- La figure 9 illustre, selon une vue générale en perspective, la cuve d'un autocuiseur conforme à un second mode de réalisation de l'invention.
- La figure 10 illustre, selon une vue en perspective, un sous-ensemble couvercle / habillage destiné à être associé à la cuve de la figure 9.

L'autocuiseur 1 conforme à l'invention est destiné à assurer la cuisson de différents aliments sous pression, dans un contexte domestique. Il forme donc à ce titre un autocuiseur domestique. L'autocuiseur 1 conforme à l'invention est donc un ustensile de cuisine présentant un caractère portatif (c'est-à-dire déplaçable manuellement) et indépendant.

De façon préférentielle, l'autocuiseur 1 conforme à l'invention est passif thermiquement, c'est-à-dire qu'il est conçu pour monter en pression sous l'effet d'une source de chauffe qui est lui est étrangère, telle qu'une plaque de cuisson. En d'autres termes, l'autocuiseur 1 est préférentiellement conçu pour être associé à une source de chauffe indépendante externe.

L'autocuiseur 1 conforme à l'invention comprend au moins une cuve 2 formant récipient de cuisson et présentant avantageusement sensiblement une symétrie de révolution selon un axe X-X'. Par la suite, l'adjectif « *axial* » se réfèrera à la direction de cet axe de symétrie X-X', direction qui s'apparente à la direction verticale lorsque l'appareil est en fonctionnement normal. La cuve 2 est par exemple et de manière classique fabriquée par emboutissage d'un flan en matériau métallique tel que l'aluminium ou l'acier inoxydable.

La cuve 2 comprend ainsi une paroi, laquelle paroi comprend elle-même, dans l'exemple de réalisation illustré, un fond 2A, qui présente par exemple une forme discoïde.

La cuve 2 comprend également, comme illustré, une paroi latérale 2B, qui s'élève à partir et à la périphérie dudit fond 2A. Ladite paroi latérale 2B présente préférentiellement une forme sensiblement annulaire et délimite une ouverture supérieure 2C permettant d'introduire des aliments dans la cuve 2, en vue de les y cuire. La paroi latérale 2B présente également une face interne 30 située en regard de l'intérieur de la cuve 2 et une face externe 31 opposée.

De préférence, tel que cela est illustré aux figures, la paroi latérale 2B comprend elle-même une portion convergente 2D, par exemple de forme sensiblement tronconique d'axe de symétrie X-X', ladite portion convergente 2D étant positionnée entre une première portion droite 2E et une seconde portion droite 2F de diamètre supérieur à celle de la première portion 2E, la deuxième portion droite 2F délimitant l'ouverture supérieure 2C de la cuve 2. La cuve 2 s'élève ainsi à partir de son fond 2A en s'évasant vers un bord libre supérieur 2G délimitant l'ouverture supérieure 2C.

L'autocuiseur 1 conforme à l'invention comprend également un couvercle 3 destiné à être rapporté sur ladite cuve 2 pour former avec cette dernière une enceinte de cuisson. L'enceinte de cuisson est de préférence sensiblement étanche, c'est-à-dire suffisamment hermétique pour permettre une montée en pression en son sein. Ainsi, l'enceinte formée par la réunion de la cuve 2 et du couvercle 3 est conçue pour permettre une augmentation significative de pression en son sein, de sorte que pendant la cuisson, la pression régnant dans l'enceinte peut être nettement supérieure à la pression atmosphérique, et par exemple excéder ladite pression atmosphérique d'une valeur supérieure ou égale à 10 kPa, et de préférence supérieure ou égale à 20 kPa. Il est également tout à fait envisageable, afin de permettre une cuisson très rapide et efficace, que l'enceinte soit conçue pour que la pression régnant en son sein puisse excéder la pression atmosphérique d'une valeur sensiblement comprise entre 40 et 110 kPa, et de préférence sensiblement comprise entre 50 et 100 kPa.

Le couvercle 3 affecte préférentiellement une forme générale discoïde, complémentaire de la forme de la cuve 2 et présente une face interne 3' destinée à se trouver en regard de l'intérieur de l'enceinte et une face externe 3" opposée. De préférence et comme illustré aux figures, le couvercle 3 présente une forme générale circulaire, c'est-à-dire qu'il présente en particulier un axe de symétrie Y-Y'.

Avantageusement, le couvercle 3 est un couvercle rentrant, c'est-à-dire qu'il est conçu pour être introduit à l'intérieur de la cuve 2, de manière à être entouré par la paroi latérale 2B de la cuve 2, et plus précisément par la face interne 30 de la paroi latérale 2B. Le couvercle 3 assure dans ce cas l'étanchéité dans l'enceinte de cuisson en venant en appui étanche contre la face interne 30 de la portion convergente 2D.

A cette fin, le couvercle 3 comprend préférentiellement un joint d'étanchéité annulaire 3C par l'intermédiaire duquel est réalisé le contact étanche enture d'une part la cuve 2, et plus précisément la face interne 30 de la cuve 2 et d'autre part le reste du couvercle 3.

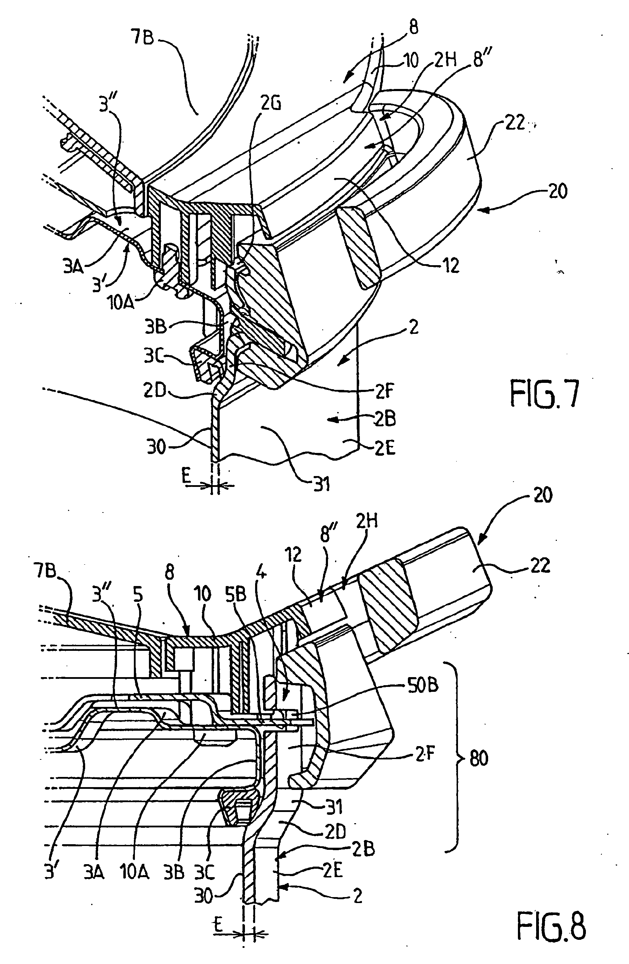

De préférence, le couvercle 3 comprend un bord tombant 3B, s'étendant sensiblement vers le bas à partir d'un corps principal 3A lui-même destiné à se trouver parallèle au fond 2A lorsque le couvercle 3 est rapporté sur la cuve 2. Le bord tombant 3B est destiné à être introduit dans la cuve 2, à l'intérieur de cette dernière, de manière à s'étendre sensiblement en vis-à-vis de la deuxième portion 2F, le joint 3C encerclant le bord tombant 3B au niveau d'un décrochement prévu à cet effet, et venant en appui contre la portion tronconique 2D, tel que cela est notamment visible à la figure 8.

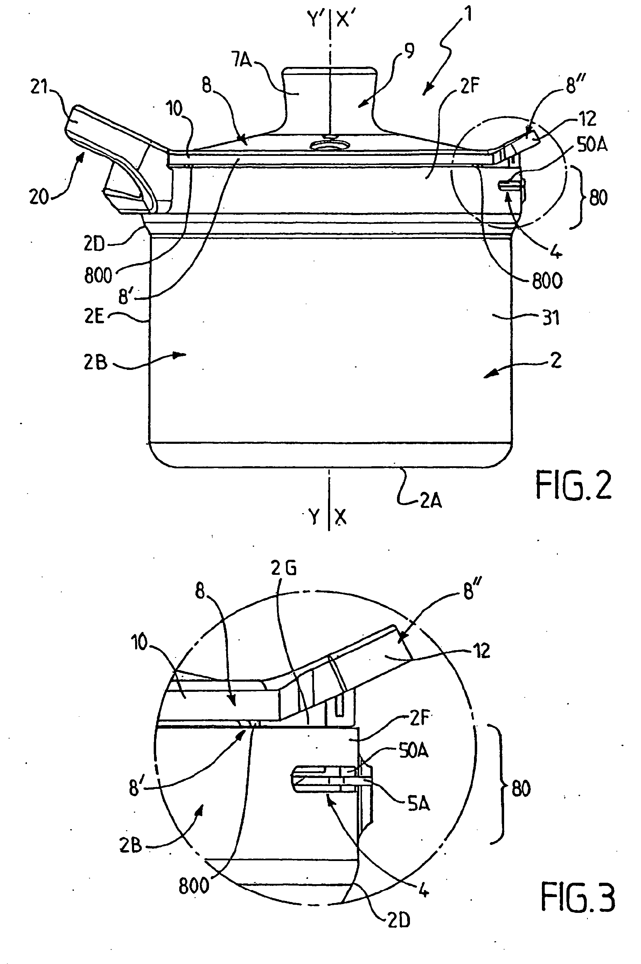

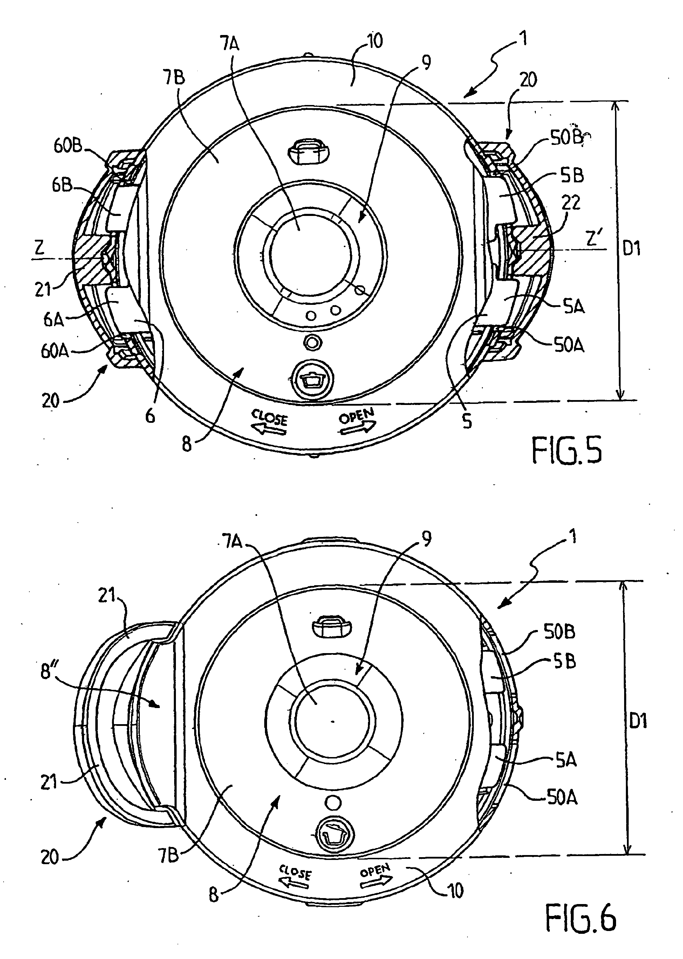

Avantageusement, le couvercle 3 peut être verrouillé ou déverrouillé à volonté sur la cuve 2, le verrouillage du couvercle 3 permettant à l'enceinte de monter en pression sans échappement du couvercle 3 sous l'effet de la pression. A cette fin, l'autocuiseur 1 comprend préférentiellement un moyen de verrouillage / déverrouillage 4 du couvercle 3 sur la cuve 2. Le moyen de verrouillage / déverrouillage 4 est avantageusement conçu pour évoluer entre une configuration de verrouillage du couvercle 3 relativement à la cuve 2 (illustrée notamment aux figures 2, 3, 5, 8) dans laquelle le couvercle 3 est solidarisé à la cuve 2, et une configuration de déverrouillage du couvercle 3 relativement à la cuve 2 (illustrée notamment à la figure 6), dans laquelle le couvercle 3 peut être librement séparé de la cuve 2.

Tel que cela est illustré aux figures, le moyen de verrouillage/déverrouillage 4 comprend au moins une ouverture de verrouillage 50A, 50B, 60A, 60B ménagée à travers la paroi de la cuve 2, c'est-à-dire traversant la paroi de la cuve sur toute son épaisseur E.

Dans l'exemple illustré aux figures, l'autocuiseur 1 comprend quatre ouvertures de verrouillage 50A, 50B, 60A, 60B disposées de manière préférentielle dans la partie supérieure 80 de la paroi 2B de la cuve 2, c'est-à-dire vers l'ouverture supérieure 2C de la cuve 2, dans le second tronçon 2F. Tel que cela est illustré aux figures, lesdites ouvertures de verrouillage 50A, 50B, 60A, 60B sont préférentiellement regroupées par paires, lesdites paires étant diamétralement opposées.

Conformément à l'invention, le moyen de verrouillage / déverrouillage 4 comprend en outre au moins un pêne 5A, 5B, 6A, 6B monté mobile sur le couvercle 3 entre d'une part une position de verrouillage du couvercle 3 (illustrée en particulier à la figure 5) dans laquelle le pêne 5A, 5B, 6A, 6B est engagé dans l'ouverture de verrouillage correspondante 50A, 50B, 60A, 60B pour interdire toute séparation du couvercle 3 de la cuve 2, à la manière d'un système de serrure pêne/gâche, et d'autre part une position de déverrouillage du couvercle 3 (illustrée à la figure 6), dans laquelle le pêne 5A, 5B, 6A, 6B est dégagé de l'ouverture de verrouillage correspondante 50A, 50B, 60A, 60B pour permettre le libre mouvement du couvercle 3 relativement à la cuve, et en particulier la séparation du couvercle 3 et de la cuve 2 par l'utilisateur.

De préférence, tel qu'illustré aux figures, l'autocuiseur 1 comprend un nombre de pênes 5A, 5B, 6A, 6B correspondant au nombre d'ouvertures de verrouillage 50A, 50B, 60A, 60B, c'est-à-dire qu'il comprend en l'occurrence quatre pênes 5A, 5B, 6A, 6B destinés à coopérer respectivement avec les ouvertures 50A, 50B, 60A, 60B. De préférence, les pênes 5A, 5B, 6A, 6B sont montés mobiles en translation sur le couvercle 3 entre une position rétractée (illustrée à la figure 6) dans laquelle les pênes 5A, 5B, 6A, 6B sont rentrés à l'intérieur du couvercle 3 de manière à ne pas dépasser latéralement de ce dernier, et d'autre part une position déployée (illustrée à la figure 5) dans laquelle chaque pêne 5A, 5B, 6A, 6B pénètre dans l'ouverture respective 50A, 50B, 60A, 60B, le passage de la position rétractée à la position déployée (et vice-versa) s'effectuant par un déplacement en translation selon une direction Z-Z' sensiblement parallèle au plan d'extension principal du couvercle 3, lequel est de préférence parallèle au fond 2A de la cuve 2.

Selon le mode de réalisation illustré aux figures, le moyen de verrouillage / déverrouillage 4 comprend avantageusement deux segments bifides 5, 6 positionnés l'un relativement à l'autre de manière diamétralement opposée par rapport à l'axe X-X', chaque segment bifide 5, 6 formant respectivement la première paire de pênes 5A, 5B et la seconde paire de pênes 6A, 6B. Par exemple, chaque segment bifide 5, 6 est formé d'une plaque métallique d'un seul tenant dont l'une des extrémités présente une forme de fourche, chaque dent de la fourche correspondant à un pêne 5A, 5B, 6A, 6B.

Chaque segment 5, 6 est monté à translation radiale en considération de l'axe X-X'. L'entraînement desdits segments 5, 6 est réalisé par tout moyen connu de l'homme du métier. Par exemple, tel qu'illustré aux figures, le moyen de verrouillage / déverrouillage 4 est commandé manuellement par l'utilisateur. A cette fin, l'autocuiseur 1 comprend de préférence un pommeau de commande 7A monté sur le couvercle 3 à rotation selon l'axe X-X'. Le pommeau 7A est relié mécaniquement aux segments 5, 6 pour que la rotation du pommeau 7A dans un sens engendre une rétractation radiale (centripète) des pênes 5A, 5B, 6A, 6B tandis que la rotation du pommeau 7A en sens contraire engendre à l'inverse un déplacement radial centrifuge des pênes 5A, 5B, 6A, 6B permettant d'engager ces derniers dans les ouvertures de verrouillage correspondantes 50A, 50B, 60A, 60B.

L'entraînement des segments 5, 6 par le pommeau 7A peut être réalisé par tout moyen connu de l'homme du métier. Par exemple, le pommeau 7A peut être solidaire d'une plaque dans laquelle sont ménagées des lumières d'entraînement 70, les segments 5, 6 étant eux-mêmes pourvus de pions respectifs 51 engagés dans les lumières d'entraînement 70. Ainsi, la rotation du pommeau 7A entraîne la rotation concomitante des lumières d'entraînement 70 lesquelles, par un effet de rampe et en combinaison avec un guidage en translation des segments 5, 6, transforment leur mouvement de rotation en un mouvement de translation radiale desdits segments 5, 6.

Conformément à l'invention, l'autocuiseur 1 comprend un habillage 8 en matière plastique qui recouvre sensiblement l'intégralité de la face externe 3" du couvercle 3, l'habillage 8 étant de préférence non détachable facilement par l'utilisateur. En d'autres termes, l'habillage 8 est disposé au droit de la face externe 3" pour que lorsque le couvercle 3 est rapporté sur la cuve 2, le corps principal 3A du couvercle est masqué par l'habillage 8, de manière en particulier à empêcher que l'utilisateur ne puisse toucher directement le corps 3A. Grâce à cette caractéristique, la physionomie générale de l'autocuiseur 1 diffère profondément de celle des autocuiseurs connus. En effet, lorsque le couvercle 3 est rapporté sur la cuve 2, il semble à l'utilisateur que le couvercle 3 est entièrement en matière plastique, les parties métalliques 3A, 3B étant sensiblement masquées, comme illustré aux figures. Cela contribue à diminuer le sentiment anxiogène que pourrait éprouver l'utilisateur, dans la mesure où le plastique, contrairement au métal, n'est généralement pas associé à des appareils soumis à des contraintes thermomécaniques importantes, comme cela est pourtant le cas des autocuiseurs. Surtout, l'habillage plastique 8 permet de constituer une couche thermiquement isolante qui diminue, voire écarte totalement, le risque de brûlure, en particulier lorsque l'utilisateur manipule le pommeau de commandé 7A pour ouvrir ou fermer l'appareil, ou commander une autre fonction (décompression, tarage de la pression de fonctionnement, etc.). Cette fonction est renforcée par le caractère non amovible de l'habillage 8, c'est-à-dire que l'utilisateur ne peut pas séparer l'habillage 8 du couvercle 3 lors du fonctionnement normal de l'autocuiseur 1.

Le terme de *« matière plastique* » doit être pris ici dans son acception la plus étendue, c'est-à-dire qu'il désigne de manière générale toute matière synthétique (voire naturelle) constituée de macromolécules. Bien évidemment, la matière plastique utilisée pour réaliser l'habillage 8 est choisie en fonction de ses propriétés thermiques et mécaniques pour résister notamment à la chaleur dégagée par le couvercle 3. Par exemple, l'habillage 8 est avantageusement réalisé en un matériau thermoplastique résistant à la chaleur, tel qu'un polybutylène téréphtalate (PBT).

L'habillage 8 peut être constitué d'une pièce d'un seul tenant disposé sur la face externe 3" du couvercle 3. Il est également envisageable, et cela correspond aux modes de réalisation illustrés aux figures, que l'habillage 8 soit constitué de plusieurs pièces distinctes indépendantes disposées de façon adjacente sur la face externe 3" du couvercle 3, l'utilisateur ne pouvant pas séparer de manière simple chaque pièce constitutive de l'habillage 8 du couvercle 3. Ainsi, dans l'exemple illustré aux figures, l'habillage 8 comprend un module de commande 9 présentant sensiblement une forme générale de révolution. Ledit module de commande 9 comprend le pommeau 7A, ce dernier étant monté à rotation selon l'axe Y-Y' sur une platine pourvue d'un capot 7B de forme annulaire entourant concentriquement le pommeau 7A, dans le prolongement de l'embase de ce dernier. Le module 9, qui comprend donc en particulier le pommeau 7A et le capot 7B, est disposé au centre du couvercle 3, sur la face externe 3". De préférence, le module 9 est attaché de manière amovible au couvercle 3, afin de faciliter le passage de ce dernier au lave-vaisselle. A cette fin, la platine sur laquelle sont montés le pommeau 7A et le capot 7B est fixée à l'aide d'un axe fileté 9A et d'un écrou 9B au corps principal 3A du couvercle 3, au centre de ce dernier.

Dans l'exemple illustré aux figures, l'habillage 8 comprend, outre le module 9 dont le diamètre de recouvrement D1 est inférieur à celui de la face externe 3" du couvercle 3 sur laquelle il est rapporté, une couronne 10, de préférence en matière thermoplastique moulée. La couronne 10 entoure le module 9 et recouvre la zone périphérique de la face externe 3" non recouverte par le module 9. En définitive, dans l'exemple de réalisation illustré aux figures, l'habillage 8 est formé par l'association du pommeau 7A, du capot 7B et de la couronne 10, toutes ces pièces étant réalisées en matière plastique, et de préférence en un matériau thermoplastique.

L'habillage 8 est de préférence attaché au couvercle 3, par exemple de la manière suivante en ce qui concerne les modes de réalisation illustré aux figures :
- le module 9 est assujetti au couvercle à l'aide du système axe fileté 9A / écrou 9B décrit dans ce qui précède,
- la couronne 10 est également vissée sur le couvercle 3, et de préférence sur le corps principal 3A du couvercle 3 ; par exemple, comme illustré aux figures, la couronne 10 est fixée au couvercle 3 à l'aide de deux vis 10A, 10B positionnées de manière diamétralement opposée par rapport à l'axe de symétrie Y-Y' du couvercle 3 et coopérant avec un puits taraudé correspondant ménagé directement dans la couronne 10, laquelle est fabriquée de préférence par moulage.

Avantageusement, l'habillage 8 est fixé à demeure sur ledit couvercle 3, c'est-à-dire qu'il est difficile voire impossible pour l'utilisateur de séparer l'habillage 8 du couvercle. En effet, dans un mode de réalisation préféré de l'invention, l'habillage 8 est conçu pour rester de manière permanente sur le couvercle 3 de l'autocuiseur 1, pendant toute la durée de vie de ce dernier. Cette mesure technique contribue à garantir la sécurité de l'utilisateur qui ne peut d'une manière simple retirer l'habillage 8 du couvercle 3 et accéder aux parties conductrices de chaleur de l'autocuiseur 1.

De préférence, comme illustrée aux figures, l'habillage 8 est attaché au couvercle 3 en des zones discrètes (en l'occurrence correspondant à la position des organes de fixation 9A, 10A, 10B) pour que le profil de déformation susceptible d'être imparti au couvercle 3 sous l'effet d'une augmentation de la pression régnant dans l'enceinte ne soit pas communiqué à l'habillage 8, du moins dans son intégralité.

En d'autres termes, le mode d'attache de l'habillage 8 au couvercle 3 permet d'éviter que le profil de déformation du couvercle 3 sous l'effet de l'augmentation de la pression dans l'enceinte ne soit entièrement communiqué à l'habillage 8, de sorte que l'utilisateur ne perçoit sensiblement pas de phénomène significatif de déformation lorsque l'autocuiseur 1 est en fonctionnement.

Cette fonction est de préférence obtenue, comme évoqué dans ce qui précède, en privilégiant des points de fixation discrets, c'est-à-dire localisés, entre l'habillage 8 et le couvercle 3. En particulier, il est particulièrement intéressant, afin d'obtenir l'effet recherché, de positionner ces points de fixation (correspondant aux organes de fixation 9A, 10A, 10B), sensiblement au voisinage de l'axe Z-Z' selon lequel agissent les segments 5, 6. En effet, dans l'exemple illustré aux figures, la déformation du couvercle 3 sous l'effet de la pression régnant dans l'enceinte est bien évidemment minimale, voire sensiblement nulle, au niveau des pênes 5A, 5B, 6A, 6B puisque ces derniers, une fois engagés dans les ouvertures correspondantes 50A, 50B, 60A, 60B empêchent localement tout déplacement du couvercle 3. Par conséquent, dans les modes de réalisation illustrés aux figures, la déformation du couvercle 3 s'effectue selon un profil sensiblement en forme de vague, les bords périphériques libres du couvercle situés sensiblement à 90° de la zone d'action des segments 5, 6 subissant la déformation la plus importante. Au contraire, la déformation du couvercle est minimale selon l'axe Z-Z' d'action des segments 5, 6. Ainsi, en attachant l'habillage 8 au voisinage de la zone d'action des segments 5, 6 et en prévoyant un jeu suffisant entre d'une part le couvercle 3, et plus précisément son corps principal 3A, et d'autre part l'habillage 8, en particulier la couronne 10, il est possible d'éviter de transmettre une déformation significative à l'habillage 8. En effet, grâce au jeu existant entre d'une part l'habillage 8, et en particulier la couronne 10, et d'autre part le couvercle 3, ce dernier peut se déformer librement sous l'habillage, sans impartir de déformation significative à l'habillage 8.

Avantageusement, l'habillage 8, qui est donc attaché au couvercle 3, déborde de ce dernier pour former un moyen d'accostage 8' destiné à venir en appui sur la cuve 2, de façon que lorsque le moyen d'accostage 8' vient en appui sur la cuve 2, le couvercle 3 se trouve suspendu à l'habillage 8 et positionné à l'intérieur de la cuve 2 dans une position prédéterminée d'étanchéité pour former avec la cuve 2 l'enceinte de cuisson. En d'autres termes, l'habillage 8 s'étend non seulement au droit de la face externe 3" du couvercle 3 mais s'étend également radialement au-delà de ladite face externe 3" pour constituer un rebord destiné à venir en appui sur la cuve, et de préférence sur le bord libre supérieur 2G de la cuve 2, ledit rebord formant le moyen d'accostage 8'. Dans l'exemple illustré aux figures, le moyen d'accostage 8' est formé par la couronne 10, laquelle s'étend radialement au-delà du couvercle 3 de manière à constituer un bord d'appui destiné à venir reposer contre la cuve 2. De préférence, ce bord d'appui en arc de cercle est lui-même pourvu de bossages d'appui 800 permettant de réaliser des appuis ponctuels précis, afin de contrôler d'autant mieux la position du couvercle 3 relativement à la cuve 2.

L'habillage 8 présente ainsi une double fonction, savoir d'une part une fonction d'habillage proprement dite permettant de modifier l'esthétique générale de l'autocuiseur 1 et de protéger l'utilisateur contre les risques de brûlures tout en améliorant le rendement énergétique global de l'autocuiseur et d'autre part une fonction de contrôle du positionnement vertical du couvercle 3 dans la cuve 2.

En particulier, grâce à la mise en oeuvre du moyen d'accostage 8', il est possible de limiter la fatigue du joint 3C qui n'a pas à supporter l'ensemble du poids du couvercle 3 dans la mesure où ce poids est repris par le bord de la couronne 10 qui déborde du couvercle et vient s'appuyer sur le bord libre 2G de la cuve 2.

Le moyen d'accostage 8' permet ainsi de réaliser une indexation verticale du couvercle 3 relativement à la cuve, c'est-à-dire de positionner précisément le couvercle relativement à la cuve de manière notamment à ce que :
- la position relative réalisée entre cuve 2 et couvercle 3 est telle que le joint 3C est suffisamment sous contrainte pour étancher mais sans pour autant assurer une butée verticale, de sorte qu'il fatigue moins ;
- les pênes 5A, 5B, 6A, 6B sont positionnés exactement à la même altitude que les ouvertures correspondantes 50A, 50B, 60A, 60B, ce qui permet à l'utilisateur de verrouiller et déverrouiller le couvercle 3 particulièrement facilement et sans effort particulier.

Cette mise en oeuvre combinée d'un couvercle 3 rentrant et d'un moyen d'indexation verticale constitue d'ailleurs une invention distincte en tant que telle, indépendamment du fait que l'habillage recouvre ou non l'intégralité de la face externe 3" du couvercle 3. Plus précisément, cette invention distincte et indépendante concerne un autocuiseur domestique comprenant au moins une cuve 2 et un couvercle 3 destinés à être rapportés sur la cuve 2 pour former avec cette dernière une enceinte de cuisson, ladite cuve 2 présentant une face interne 30 située en regard de l'intérieur de la cuve 2 et une face externe 31 opposée, ledit autocuiseur 1 comprenant un moyen d'accostage 8' attaché au couvercle 3 et destiné à venir en appui sur la cuve 2, de façon que lorsque le moyen d'accostage 8' vient en appui sur la cuve 2, le couvercle 3 se trouve suspendu au moyen d'accostage 8' et positionné à l'intérieur de la cuve 2 dans une position prédéterminée d'étanchéité pour former avec la cuve l'enceinte de cuisson. Dans ce cas, le moyen d'accostage est de préférence formé par un habillage, lequel comprend avantageusement au moins la couronne 10 ou tout autre moyen susceptible de réaliser une butée permettant un appui stable sur la cuve 2, et en particulier sur le bord libre 2G de la cuve 2.

Avantageusement, et conformément aux modes de réalisation illustrés aux figures, l'habillage 8 déborde (radialement) du couvercle 3 pour former un moyen d'indexation 8" destiné à coopérer avec un moyen de réception complémentaire 2H dont est pourvue la cuve 2, pour empêcher sensiblement toute rotation du couvercle 3 relativement à la cuve 2 autour de son axe de symétrie Y-Y', lorsque le couvercle 3 est rapporté sur la cuve 2. En d'autres termes, la coopération du moyen d'indexation 8" avec le moyen de réception complémentaire 2H permet d'immobiliser, dans le plan horizontal, le couvercle 3 en position, ladite position étant bien entendu de préférence choisie pour permettre un alignement exact des pênes 5A, 5B, 6A, 6B avec les ouvertures de verrouillage correspondantes 50A, 50B, 60A, 60B. Les moyens d'indexation 8" et de réception complémentaire 2H permettent donc une indexation dans le plan horizontal du couvercle 3 relativement à la cuve 2. Dans le mode de réalisation illustré aux figures, l'habillage 8 assure donc une triple fonction d'habillage, d'indexation verticale et d'indexation horizontale. Bien évidemment, il est envisageable que l'habillage 8 assure uniquement des fonctions d'habillage et d'indexation verticale, ou à titre alternatif des fonctions d'habillage et d'indexation horizontale, la présence simultanée des trois fonctions, quoique préférée, n'étant pas forcément nécessaire.

Avantageusement, la cuve 2 comprend au moins un organe de préhension 20, lequel est de préférence fixé sur la paroi de la cuve 2. L'organe de préhension 20 est conçu pour permettre à l'utilisateur de manipuler non seulement la cuve 2 seule mais également et surtout l'autocuiseur 1 complet (formé de l'assemblage de la cuve 2 et du couvercle 3), en particulier lorsque ledit autocuiseur 1 est rempli d'aliments cuits ou à cuire, accompagnés éventuellement d'un liquide de cuisson. L'organe de préhension 20 est donc conçu pour permettre une prise manuelle aisée et ferme de l'autocuiseur 1, de manière à ce que l'utilisateur puisse déplacer manuellement et à volonté son autocuiseur 1 sans risque de voir ce dernier lui échapper. De préférence et comme illustré aux figures, l'organe de préhension 20 comprend au moins une, et de préférence deux poignées 21, 22 fixées sur la paroi latérale 2B de la cuve 2, de préférence dans la seconde portion supérieure 2F de ladite paroi, à l'extérieur de cette dernière. Chaque poignée 21, 22 s'étend ainsi sensiblement à partir de la face externe 31 de la cuve 2, radialement par rapport à l'axe X-X', vers l'extérieur de la cuve. Les deux poignées 21, 22 sont de préférence disposées de manière diamétralement opposée l'une par rapport à l'autre en considération de l'axe X-X'.

De manière particulièrement avantageuse, l'organe de préhension 20 porte le moyen de réception complémentaire 2H, et de manière encore plus préférentielle l'organe de préhension 20 est conformé pour réaliser par lui-même ledit moyen de réception complémentaire 2H.

Ainsi, dans l'exemple illustré aux figures, chaque poignée 21, 22 est conformée pour constituer le moyen de réception complémentaire 2H destiné à coopérer avec le moyen d'indexation 8" formé quant à lui par l'habillage 8, et de préférence par la couronne 10.

Avantageusement, le moyen d'indexation 8" et le moyen de réception complémentaire 2H sont conçus pour coopérer en emboîtement.

Par exemple, l'habillage 8 comprend de préférence au moins une oreille 11 qui déborde du couvercle 3 pour former le moyen d'indexation 8", l'organe de préhension 20 présentant quant à lui une concavité 21A formant moyen de réception 2H et destinée à recevoir ladite oreille 11, de manière à coopérer avec cette dernière (en emboîtement de préférence).

Avantageusement et conformément aux modes de réalisation illustrés aux figures, l'habillage 8 comprend deux oreilles 11, 12 qui de préférence viennent de matière avec la couronne 10 et qui débordent radialement et de façon diamétralement opposée du couvercle 3 pour former le moyen d'indexation 8". L'organe de préhension 20 présente quant à lui deux concavités 21A, 22A ménagées respectivement dans chaque poignée 21, 22, la forme de chaque concavité 21A, 22A étant complémentaire de celle des oreilles 11, 12 pour accueillir ces dernières de manière ajustée et empêcher ainsi toute rotation subséquente de l'ensemble constitué par l'habillage 8 et le couvercle 3. De préférence les oreilles 11, 12 sont identiques, de même que les concavités 21A, 22A, pour permettre à chaque concavité 21A, 22A d'accueillir indifféremment l'une ou l'autre des oreilles 11, 12. Cela permet d'autoriser deux positions fonctionnelles du couvercle 3 relativement à la cuve 2, ce qui facilite l'utilisation de l'autocuiseur 1.

Ainsi, à l'aide seulement de deux pièces, savoir l'habillage 8 d'une part et au moins une poignée 21, 22 d'autre part, il est possible de réaliser une indexation verticale et horizontale du couvercle 3, ce qui est particulièrement intéressant dans le cas où le moyen de verrouillage / déverrouillage 4 nécessite précisément une position particulière du couvercle 3 relativement à la cuve 2.

Il est d'ailleurs remarquable de noter que l'ensemble de ces fonctions est obtenu à l'aide de pièces qui peuvent être préférentiellement réalisées en matière plastique, c'est-à-dire à l'aide de procédés (du genre moulage) permettant d'obtenir aisément des conformations de pièces complexes. Les pièces devant, pour des raisons de résistance thermomécanique, être obligatoirement réalisées en métal, et qui sont de ce fait plus difficiles et coûteuses à travailler, ne nécessitent quant à elles pas d'opération de mise en forme particulière.

La mise en oeuvre d'un moyen d'indexation horizontale associé à un couvercle 3 rentrant constitue d'ailleurs une possibilité séparée distincte des autres aspects inventifs décrits dans ce qui précède, et en particulier indépendante du fait que l'habillage 8 recouvre en totalité ou non la face externe 3" du couvercle 3.

Cette possibilité concerne plus particulièrement un autocuiseur domestique 1 comprenant au moins une cuve 2 et un couvercle 3 destiné à être rapporté sur la cuve 2 pour former avec cette dernière une enceinte de cuisson, ledit couvercle 3 étant un couvercle rentrant c'est-à-dire conçu pour être introduit dans la cuve 2 et être de ce fait entouré par la paroi latérale 2B de cette dernière, ledit autocuiseur 1 comprenant un moyen d'indexation 8" attaché au couvercle 3 et destiné à coopérer avec un moyen de réception complémentaire 2H pour empêcher sensiblement toute rotation du couvercle 3 relativement à la cuve 2 autour de son axe de symétrie Y-Y'.

Avantageusement, et comme illustré aux figures, l'habillage 8 comprend une collerette qui déborde du couvercle 3 pour former de préférence le moyen d'accostage 8', ladite collerette étant également conformée localement pour constituer les oreilles 11, 12. Cette collerette, qui forme donc à la fois les oreilles 11, 12 et le moyen d'accostage 8' vient de matière avec la couronne 10.

Avantageusement, la collerette est conçue pour ne pas déborder radialement de la cuve 2 lorsque l'oreille 11 est reçue dans la concavité correspondante 21A et que le couvercle 3 se trouve donc dans sa position prédéterminée d'étanchéité (l'oreille 12 étant alors reçue dans la concavité 22A, étant entendu qu'il est également possible, lorsque l'habillage 8 présente avantageusement un caractère symétrique comme illustré aux figures, que l'oreille 11 soit reçue dans la concavité 22A et que l'oreille 12 soit reçue dans la concavité 21A). Ainsi, comme cela est visible aux figures, la collerette se trouve toujours soit dans le prolongement de la paroi latérale 2B, soit dans le prolongement de l'une ou l'autre des poignées 21, 22, lesquelles sont généralement réalisées en un matériau résistant à la chaleur, tel qu'un plastique thermodurcissable ou un métal.

Grâce à cette mesure technique, il est envisageable que la couronne 10 soit réalisée en un matériau thermoplastique sans déroger aux normes de sécurité en vigueur.

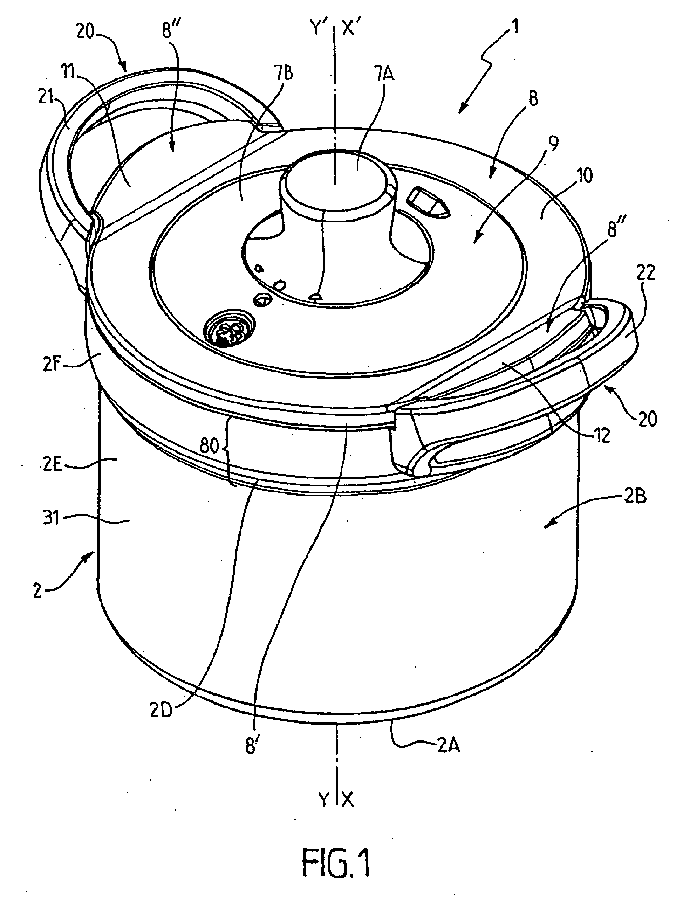

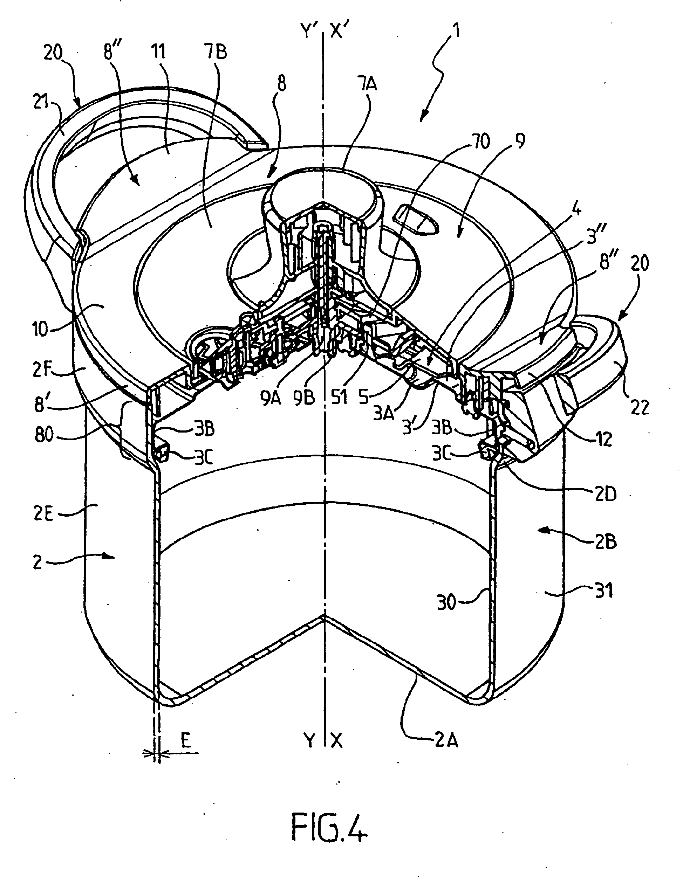

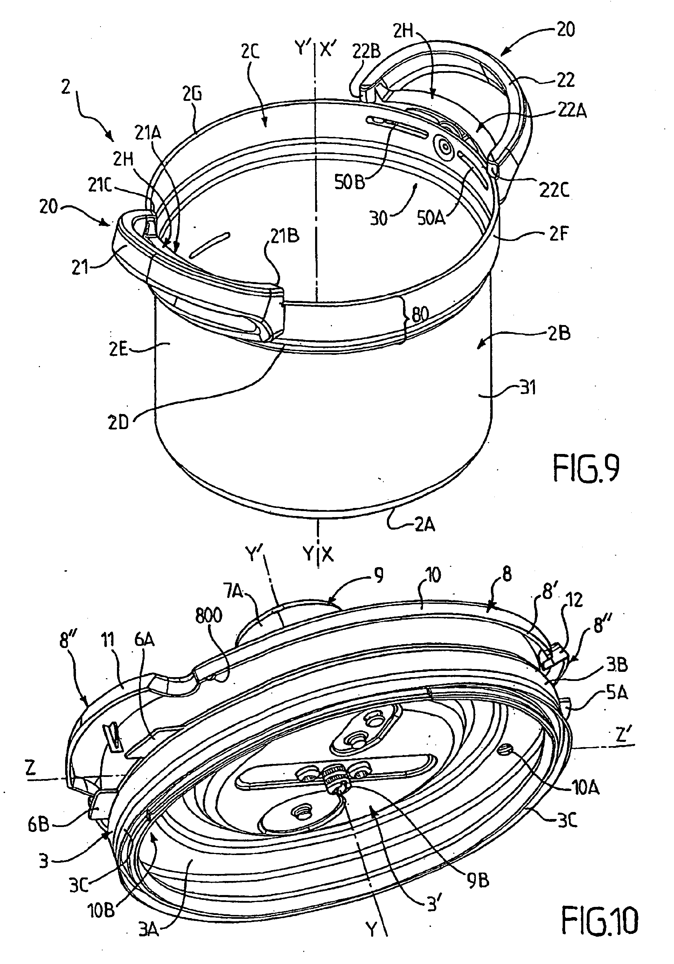

Avantageusement, l'autocuiseur 1 est conçu pour que tant que le moyen d'indexation 8" ne coopère pas avec le moyen de réception complémentaire 2H pour empêcher sensiblement toute rotation du couvercle 3 relativement à la cuve 2 autour de son axe de symétrie Y-Y', le moyen d'accostage 8' est maintenu à une distance suffisante de la cuve 2 pour empêcher le couvercle d'atteindre sa position prédéterminée d'étanchéité. Cette mesure technique avantageuse est mise en oeuvre dans l'autocuiseur 1 correspondant au mode de réalisation illustré aux figures 9 et 10, les modes de réalisations des figures 1 à 8 d'une part et 9 et 10 d'autre part ne différant que sur ce point. Selon le mode de réalisation des figures 9 et 10, la collerette formant à la fois moyen d'accostage 8' et moyen d'indexation 8" est conçue pour venir en appui contre l'organe de préhension 20 lorsque l'oreille 11 n'est pas reçue dans la concavité correspondante 21A (ou plus précisément en l'espèce lorsque les oreilles 11, 12 ne sont pas reçues dans leur concavité respective 21A, 22A), de manière à maintenir le couvercle 3 en dehors de sa position prédéterminée d'étanchéité, c'est-à-dire suffisamment soulevé pour que le joint d'étanchéité 3C ne soit plus en contact étanche avec la paroi interne 30 de la cuve 2. Ainsi, la seule configuration permettant de réaliser une enceinte de cuisson étanche est celle dans laquelle les oreilles 11, 12 sont emboîtées dans les cavités 21A, 22A correspondantes, toute autre orientation du couvercle 3 relativement à la cuve 2 conduisant à la mise en appui de la collerette sur les poignées 21, 22, empêchant ainsi le couvercle de descendre jusqu'à sa position étanche.

Afin de réaliser cette fonction de sécurité, les poignées 21, 22 présentent par exemple, comme cela est illustré à la figure 9, des protubérances 21B, 21C, 22B, 22C rentrant vers l'intérieur de la cuve 2, de manière à pouvoir former des appuis pour le moyen d'accostage 8' lorsque le couvercle 3 est mal positionné sur la cuve 2.

De manière particulièrement préférentielle, les poignées 21, 22 sont disposées, à l'extérieur de la cuve 2, en regard des ouvertures de verrouillage 50A, 50B, 60A, 60B pour masquer ces dernières à la vue de l'utilisateur lorsque le couvercle 3 est rapporté sur la cuve 2.

Le moyen de verrouillage / déverrouillage 4 est quant à lui avantageusement masqué par l'habillage 8, dans la mesure où l'essentiel du moyen de verrouillage / déverrouillage 4 est disposé entre la face externe 3" du couvercle 3 et l'habillage 8.

De cette façon, la structure et le fonctionnement du moyen de verrouillage / déverrouillage 4 est sensiblement entièrement dissimulée aux yeux de l'utilisateur, ce qui contribue à la fiabilité de l'appareil (puisque l'ensemble des pièces mobiles et des ouvertures est de ce fait protégé) mais également à faire diminuer le sentiment d'anxiété susceptible d'être éprouvé par l'utilisateur, qui perçoit moins la nature technique de l'autocuiseur.

## Revendications

1. Autocuiseur domestique (1) comprenant au moins une cuve (2) et un couvercle (3) destiné à être rapporté sur la cuve (2) pour former avec cette dernière une enceinte de cuisson, ledit couvercle (3) présentant une face interne (3') destinée à se trouver en regard de l'intérieur de l'enceinte et une face externe (3") opposée, **caractérisé en ce qu'**il comprend un habillage (8) en matière plastique qui recouvre sensiblement l'intégralité de ladite face externe (3").

2. Autocuiseur (1) selon la revendication 1 **caractérisé en ce que** l'habillage est attaché au couvercle et déborde de ce dernier pour former un moyen d'accostage (8') destiné à venir en appui sur la cuve (2), de façon que lorsque le moyen d'accostage (8') vient en appui sur la cuve (2), le couvercle (3) se trouve suspendu à l'habillage (8) et positionné à l'intérieur de la cuve (2) dans une position prédéterminée d'étanchéité pour former avec la cuve (2) l'enceinte de cuisson.

3. Autocuiseur (1) selon la revendication 1 ou 2 **caractérisé en ce que** le couvercle (3) présente un axe de symétrie (Y-Y') et **en ce que** l'habillage (8) est attaché au couvercle (3) et déborde de ce dernier pour former un moyen d'indexation (8") destiné à coopérer avec un moyen de réception complémentaire (2H) dont est pourvue la cuve (2), pour empêcher sensiblement toute rotation du couvercle (3) relativement à la cuve (2) autour de son axe de symétrie (Y-Y').

4. Autocuiseur (1) selon les revendications 2 et 3 **caractérisé en ce que** tant que le moyen d'indexation (8") ne coopère pas avec le moyen de réception complémentaire (2H) pour empêcher sensiblement toute rotation du couvercle (3) relativement à la cuve (2) autour de son axe de symétrie (Y-Y'), le moyen d'accostage (8') est maintenu à une distance suffisante de la cuve (2) pour empêcher le couvercle (3) d'atteindre sa position prédéterminée d'étanchéité.

5. Autocuiseur (1) selon la revendication 3 ou 4 **caractérisé en ce que** la cuve (2) comprend au moins un organe de préhension (20), ledit organe de préhension (20) portant le moyen de réception complémentaire (2H).

6. Autocuiseur (1) selon la revendication 5 **caractérisé en ce que** le moyen d'indexation (8") et le moyen de réception complémentaire (2H) sont conçus pour coopérer en emboîtement.

7. Autocuiseur (1) selon la revendication 6 **caractérisé en ce que** l'habillage (8) comprend au moins une oreille (11, 12) qui déborde du couvercle (3) pour former le moyen d'indexation (8"), l'organe de préhension (20) présentant quant à lui une concavité (21A, 22A) formant moyen de réception (2H) et destinée à recevoir ladite oreille (11, 12).

8. Autocuiseur (1) selon les revendications 4 et 7 **caractérisé en ce que** l'habillage (8) comprend une collerette qui déborde du couvercle (3), ladite collerette étant conçue pour venir en appui contre l'organe de préhension (20) lorsque l'oreille (11, 12) n'est pas reçue dans la concavité (21A, 22A), de manière à maintenir le couvercle (3) en dehors de sa position prédéterminée d'étanchéité.

9. Autocuiseur (1) selon la revendication 8 **caractérisé en ce que** lorsque l'oreille (11, 12) est reçue dans la concavité (21A, 22A) et que le couvercle (3) se trouve donc dans sa position d'étanchéité, la collerette est conçue pour ne pas déborder radialement de la cuve (2).

10. Autocuiseur (1) selon l'une des revendications 1 à 9 **caractérisé en ce que** l'habillage (8) est attaché au couvercle (3) en des zones discrètes pour que le profil de déformation susceptible d'être imparti au couvercle (3) sous l'effet d'une augmentation de la pression régnant dans l'enceinte ne soit pas communiqué à l'habillage (8), du moins dans son intégralité.

11. Autocuiseur (1) selon l'une des revendications 1 à 10 **caractérisé en ce qu'**il comprend un moyen de verrouillage / déverrouillage (4) du couvercle (3) sur la cuve (2), ledit moyen de verrouillage / déverrouillage (4) comprenant d'une part au moins une ouverture de verrouillage (50A, 50B, 60A, 60B) ménagée à travers la paroi de la cuve (2) et d'autre part un pêne (5A, 5B, 6A, 6B) monté mobile sur le couvercle (3) entre une position de verrouillage du couvercle (3) dans laquelle le pêne (5A, 5B, 6A, 6B) est engagé dans l'ouverture de verrouillage et une position de déverrouillage du couvercle (3) dans laquelle le pêne (5A, 5B, 6A, 6B) est dégagé de l'ouverture de verrouillage.

12. Autocuiseur (1) selon la revendication 11 **caractérisé en ce que** le moyen de verrouillage / déverrouillage (4) est masqué par l'habillage (8).

13. Autocuiseur (1) selon l'une des revendications 1 à 12 **caractérisé en ce que** la cuve (2) comprend une paroi latérale (2B), ladite paroi latérale (2B) comprend elle-même une portion convergente (2D) contre laquelle le couvercle (3) est destiné à venir en contact, à l'intérieur de la cuve (2), pour former l'enceinte de cuisson.

14. Autocuiseur (1) selon l'une des revendications 1 à 13 **caractérisé en ce que** l'habillage (8) est réalisé en un matériau thermoplastique.

15. Autocuiseur (1) selon l'une des revendications 1 à 14 **caractérisé en ce qu'**il est conçu pour être associé à une source de chauffe indépendante externe.

## Claims

1. Domestic pressure cooker (1) comprising at least a pan (2) and a lid (3) designed to be added to the pan (2) to form a cooking chamber with the latter, wherein said lid (3) has an inside face (3') designed to be positioned opposite the inside of the chamber and an outside face (3") opposite, **characterised in that** it comprises a plastic trim (8) which substantially covers all of said outside face (3").

2. Pressure cooker (1) according to claim 1 **characterised in that** the trim is attached to the lid and overlaps the latter to form contact means (8') designed to come into contact with the pan (2), so that when the contact means (8') come into contact with the pan (2), the lid (3) is suspended from the trim (8) and is positioned inside the pan (2) in a predetermined sealing position to form the cooking chamber with the pan (2).

3. Pressure cooker (1) according to claim 1 or 2, **characterised in that** the lid (3) has an axis of symmetry (Y-Y') and **in that** the trim (8) is attached to the lid (3) and overlaps the latter to form indexation means (8") designed to cooperate with complementary reception means (2H) fitted to the pan (2), substantially to prevent any rotation of the lid (3) relative to the pan (2) around its axis of symmetry (Y-Y').

4. Pressure cooker (1) according to claims 2 and 3, **characterised in that** as long as the indexation means (8") are not engaged with the complementary reception means (2H) substantially to prevent any rotation of the lid (3) relative to the pan (2) around its axis of symmetry (Y-Y'), the contact means (8') are kept at a sufficient distance from the pan (2) to prevent the lid (3) from reaching its predetermined sealing position.

5. Pressure cooker (1) according to claim 3 or 4 **characterised in that** the pan (2) at least comprises a gripping part (20), wherein said gripping part (20) bears the complementary reception means (2H).

6. Pressure cooker (1) according to the claim 5, **characterised in that** the indexation means (8") and the complementary reception means (2H) are designed to engage into one another.

7. Pressure cooker (1) according to claim 6, **characterised in that** the trim (8) at least comprises a lug (11, 12) which overlaps the lid (3) to form the indexation mans (8"), wherein the gripping part (20) has a concave portion (21A, 22A) forming the reception means (2H) and is designed to accommodate said lug (11, 12).

8. Pressure cooker (1) according to claims 4 and 7, **characterised in that** the trim (8) comprises a collar which overlaps the lid (3), wherein said collar is designed to come into contact against the gripping part (20) when the lug (11, 12) is not accommodated in the concave portion (21A, 22A), so as to keep the lid (3) out of its predetermined sealing position.

9. Pressure cooker (1) according to claim 8, **characterised in that** when the lug (11, 12) is accommodated in the concave portion (21A, 22A) and the lid (3) is in its sealing position, the collar is designed so that it does not overlap the pan (2) radially.

10. Pressure cooker (1) according to any of claims 1 to 9, **characterised in that** the trim (8) is attached to the lid (3) in discrete zones so that the deformation profile that may be passed onto the lid (3) under the effect of an increase in pressure inside the chamber is not communicated to the trim (8), or at least not entirely.

11. Pressure cooker (1) according to any of claims 1 to 10, **characterised in that** it comprises means of locking / releasing (4) the lid (3) on the pan (2), wherein said locking / release means (4) comprise at least a locking opening (50A, 50B, 60A, 60B) located in the wall of the pan (2) and a pin (5A, 5B, 6A, 6B) with a mobile mounting on the lid (3) between a position where the lid (3) is locked in which the pin (5A, 5B, 6A, GB) is engaged in the locking opening and a position where the lid (3) is released in which the pin (5A 5B, 6A, 6B) is cleared from the locking opening.

12. Pressure cooker (1) according to claim 11 **characterised in that** the locking / release means (4) are masked by the trim (8).

13. Pressure cooker (1) according to any of claims 1 to 12, **characterised in that** the pan (2) comprises a lateral wall (2B), wherein said lateral wall (2B) itself comprises a convergent portion (2D) against which the lid (3) is designed to come into contact inside the pan (2), to form the cooking chamber.

14. Pressure cooker (1) according to any of claims 1 to 13, **characterised in that** the trim (8) is made of a thermoplastic material.

15. Pressure cooker (1) according to any of claims 1 to 14, **characterised in that** it is designed to be associated to an independent external source of heat.

## Patentansprüche

1. Schnellkochtopf (1) für Haushaltszwecke, umfassend mindestens eine Wanne (2) und einen Deckel (3), der dazu bestimmt ist, auf die Wanne (2) aufgesetzt zu werden, um mit dieser letztgenannten ein Kochbehältnis zu bilden, wobei der Deckel (3) eine Innenseite (3'), die dazu bestimmt ist, sich gegenüber dem Inneren des Behältnisses zu befinden, und eine Außenseite (3") aufweist, **dadurch gekennzeichnet, dass** er eine Verkleidung (8) aus Kunststoff umfasst, die im Wesentlichen die Gesamtheit der Außenseite (3") bedeckt.

2. Schnellkochtopf (1) nach Anspruch 1, **dadurch gekennzeichnet, dass** die Verkleidung am Deckel befestigt ist und über diesen hinausreicht, um ein Anlagemittel (8') zu bilden, das dazu bestimmt ist, an der Wanne (2) zur Anlage zu gelangen, so dass, wenn das Anlagemittel (8') an der Wanne (2) anliegt, der Deckel (3) von der Verkleidung (8) abgehoben und im Inneren der Wanne (2) in einer vorbestimmten Abdichtungsposition angeordnet ist, um mit der Wanne (2) das Kochbehältnis zu bilden.

3. Schnellkochtopf (1) nach Anspruch 1 oder 2, **dadurch gekennzeichnet, dass** der Deckel (3) eine Symmetrieachse (Y-Y') aufweist, und dass die Verkleidung (8) am Deckel (3) befestigt ist und über diesen letztgenannten hinausragt, um ein Indexierungsmittel (8") zu bilden, das dazu bestimmt ist, mit einem komplementären Aufnahmemittel (2H), mit dem die Wanne (2) versehen ist, zusammenzuwirken, um im Wesentlichen jede Drehung des Deckels (3) in Bezug zur Wanne (2) um seine Symmetrieachse (Y-Y') zu verhindern.

4. Schnellkochtopf (1) nach den Ansprüchen 2 und 3, **dadurch gekennzeichnet, dass** das Indexierungsmittel (8") nicht mit dem komplementären Aufnahmemittel (2H) zusammenwirkt, um im Wesentlichen jede Drehung des Deckels (3) in Bezug zur Wanne (2) um seine Symmetrieachse (Y-Y') zu verhindern, wobei das Anlagemittel (8') in einem ausreichenden Abstand zur Wanne (2) gehalten wird, um den Deckel (3) daran zu hindern, seine vorbestimmte Abdichtungsposition zu erreichen.

5. Schnellkochtopf (1) nach Anspruch 3 oder 4, **dadurch gekennzeichnet, dass** die Wanne (2) mindestens ein Greifelement (20) umfasst, wobei das Greifelement (20) das komplementäre Aufnahmemittel (2H) trägt.

6. Schnellkochtopf (1) nach Anspruch 5, **dadurch gekennzeichnet, dass** das Indexierungsmittel (8") und das komplementäre Aufnahmemittel (2H) derart ausgeführt sind, dass sie durch Ineinanderpassen zusammenwirken.

7. Schnellkochtopf (1) nach Anspruch 6, **dadurch gekennzeichnet, dass** die Verkleidung (8) mindestens eine Öse (11, 12) umfasst, die über den Deckel (3) hinausragt, um das Indexierungsmittel (8") zu bilden, wobei das Greifelement (20) seinerseits einen konkaven Raum (21A, 22A) aufweist, der das Aufnahmemittel (2H) bildet und dazu bestimmt ist, die Öse (11, 12) aufzunehmen.

8. Schnellkochtopf (1) nach den Ansprüchen 4 und 7, **dadurch gekennzeichnet, dass** die Verkleidung (8) einen Kragen umfasst, der über den Deckel (3) hinausragt, wobei der Kragen derart ausgeführt ist, dass er am Greifelement (20) zur Anlage gelangt, wenn die Öse (11, 12) nicht in dem konkaven Raum (21A, 22A) aufgenommen ist, um den Deckel (3) außerhalb seiner vorbestimmten Abdichtungsposition zu halten.

9. Schnellkochtopf (1) nach Anspruch 8, **dadurch gekennzeichnet, dass**, wenn die Öse (11, 12) in dem konkaven Raum (21A, 22A) aufgenommen ist und sich der Deckel (3) somit in seiner Abdichtungsposition befindet, der Kragen derart ausgeführt ist, dass er radial nicht über die Wanne (2) hinausragt.

10. Schnellkochtopf (1) nach einem der Ansprüche 1 bis 9, **dadurch gekennzeichnet, dass** die Verkleidung (8) am Deckel (3) in versteckten Zonen befestigt ist, damit das Verformungsprofil, das dem Deckel (3) unter der Wirkung einer Erhöhung des in dem Behältnis herrschenden Drucks auferlegt wird, nicht auf die Verkleidung (8) übertragen wird, zumindest nicht zur Gänze.

11. Schnellkochtopf (1) nach einem der Ansprüche 1 bis 10, **dadurch gekennzeichnet, dass** er ein Mittel zur Verriegelung / Entriegelung (4) des Deckels (3) auf der Wanne (2) umfasst, wobei das Verriegelungs/Entriegelungsmittel (4) einerseits mindestens eine Verriegelungsöffnung (50A, 50B, 60A, 60B), die durch die Wand der Wanne (2) vorgesehen ist, und andererseits einen Riegel (5A, 5B, 6A, 6B) umfasst, der beweglich am Deckel (3) zwischen einer Verriegelungsposition des Deckels (3), in der der Riegel (5A, 5B, 6A, 6B) in die Verriegelungsöffnung eingreift, und einer Entriegelungsposition des Deckels (3), in sich der Riegel (5A, 5B, 6A, 6B) nicht in der Verriegelungsöffnung befindet, montiert ist.

12. Schnellkochtopf (1) nach Anspruch 11, **dadurch gekennzeichnet, dass** das Verriegelungs-/Entriegelungsmittel (4) durch die Verkleidung (8) verdeckt ist.

13. Schnellkochtopf (1) nach einem der Ansprüche 1 bis 12, **dadurch gekennzeichnet, dass** die Wanne (2) eine Seitenwand (2B) umfasst, wobei die Seitenwand (2B) selbst einen konvergierenden Abschnitt (2D) umfasst, mit dem der Deckel (3) im Inneren der Wanne (2) in Kontakt kommen soll, um das Kochbehältnis zu bilden.

14. Schnellkochtopf (1) nach einem der Ansprüche 1 bis 13, **dadurch gekennzeichnet, dass** die Verkleidung (8) aus Thermoplast ist.

15. Schnellkochtopf (1) nach einem der Ansprüche 1 bis 14, **dadurch gekennzeichnet, dass** er derart ausgeführt ist, dass er mit einer externen unabhängigen Wärmequelle verbunden werden kann.
